Europäisches Patentamt

(19) European Patent Office

Office européen des brevets

(11) Publication number : **0 447 213 A1**

(12) # EUROPEAN PATENT APPLICATION

(21) Application number : 91302122.6

(22) Date of filing : 13.03.91

(51) Int. Cl.⁵ : **H04N 7/08**

(30) Priority : 13.03.90 JP 63332/90

(43) Date of publication of application :
18.09.91 Bulletin 91/38

(84) Designated Contracting States :
DE FR GB

(71) Applicant : KABUSHIKI KAISHA TOSHIBA
72, Horikawa-cho Saiwai-ku
Kawasaki-shi Kanagawa-ken 210 (JP)

(72) Inventor : Yasuki, Seijiro
c/o Intellectual Prop.Div., Toshiba Corp.
1-1-1, Shibaura, Minato-ku, Tokyo (JP)
Inventor : Kawai, Kiyoyuki
c/o Intellectual Prop.Div., Toshiba Corp.
1-1-1, Shibaura, Minato-ku, Tokyo (JP)
Inventor : Ogawa, Yoshihiko
c/o Intellectual Prop.Div., Toshiba Corp.
1-1-1, Shibaura, Minato-ku, Tokyo (JP)

(74) Representative : Muir, Ian R. et al
HASELTINE LAKE & CO. Hazlitt House 28
Southampton Buildings Chancery Lane
London WC2A 1AT (GB)

(54) Multiplex transmitter and multiplex receiver for an additional signal.

(57)    This invention relates to multiplex transmitters and receiver pairs which use a method of superimposing an additional signal onto a standard television signal. Improved quality television pictures may be produced both by widening the aspect of the picture and by improving the definition. Compatibility with old receiving sets is ensured if the additional information is sent as a second superimposed television signal. This invention achieves this within the transmitter by the orthogonal transformation (262) of the additional signal. The high order components of the orthogonal signal are then time division multiplexed (264) and super-imposed (34) onto the first television signal while the low order components of the orthogonal signal are frequency division multiplexed (266) and then synthesised (40) onto the vertical overscanning part of the first television signal.

EP 0 447 213 A1

FIG.1

## MULTIPLEX TRANSMITTER AND MULTIPLEX RECEIVER FOR AN ADDITIONAL SIGNAL

The present invention relates to the field of multiplex transmitters and multiplex receivers for superimposing an additional signal on a standard television signal for widening the aspects or improving the definition of television pictures in a television system.

In recent years, many advances and developments have been made for improving the quality of the picture in a television broadcasting system. There are methods for widening the aspect of the picture and improving the definition, both of which improve the quality of the picture. Widening of the aspect of the picture improves the quality of the picture by adopting a larger aspect ratio than the present one. Improving the definition improves the quality of the picture by widening the band of the television signal.

When widening the aspect or improving the definition of the television picture, it is necessary to take account of the compatibility of the change with the present broadcasting system, e.g., the NTSC system. In order to maintain the compatibility of the new and present broadcasting systems, it has been suggested that additional information for widening the aspect or improving the definition be superimposed as additional information on the present broadcast television signal. When superimposing the additional information, it is desired to superimpose in a base-band of the television signal. Thus, a present television receiver may process the television signal of the new broadcasting system without a change in the apparatus.

On the widening of aspect, many advances and developments have been made on widening the aspect ratio from the present ratio of 4:3 to 16:9. One method of widening the aspect is discussed below. This method is described in "A Study of Multiplexing Technique for Widening Aspect-Ratio" (Yasuki et al., ITEJ Technical report vol. 13, No. 41, pp. 19-24, BCS'89-4 (Aug. 1989)).

In that method, the right and left portions of the wide picture with an aspect ratio 16:9 (hereinafter called side portion of the picture) are separated. The center portion of the picture is transformed to the NTSC picture with an aspect ratio 4:3 and transmitted. The side portion of the picture is multiplexed in the present transmission band, and transmitted.

By this method, the present television receiver fails to reproduce the picture of the side portion; however, it usually reproduces the picture of the center portion as well as before. However, in this method, the signal representing the side portion of the picture is frequency-multiplexed onto the signal representing the center portion of the picture. Thus, if the signal level of the side portion of the picture is large in the high frequency band, the signal may interrupt the picture of the present television receiver. On the other hand, if the amplitude of the signal of the side portion of the picture to be multiplexed is compressed by non-linear processing to reduce the interruption described above, the quality of the picture reproduced at the receiving side is reduced because a component of the high frequency band is not transmitted because of the non-linear processing.

Accordingly, it is an object of the present invention to provide an improved multiplex transmitter for superimposing an additional signal on a television signal. Also, a multiplex receiver is provided for demultiplexing the signal. The use of this technique reduces the interruption to the picture of the present television receiver and does not reduce the quality of the picture reproduced when the signal of the side portion of the picture is transmitted with the signal of the center portion.

In accordance with the present invention, the foregoing objects are achieved by providing a multiplex transmitter for the additional signal which includes an orthogonal transformer for orthogonal transforming the additional television signal by an operation between picture elements in the vertical direction, a frequency multiplexer for frequency-multiplexing the low order components of the orthogonally transformed signal, a time-division multiplexer for time-division multiplexing the high order components of the orthogonally transformed signal, and synthesizer means for synthesizing the output of the frequency multiplexer onto vertical over-scanning part of the first television signal, and a superimposition means for superimposing the output from the first time-division multiplexer onto the first television signal.

In accordance with another aspect of the present invention, the above-stated objects are achieved by providing a multiplex receiver which comprises a first separator for separating a first television signal, to which an additional signal has been multiplexed, into the first television signal and the additional signal, a second separator for separating the additional signal from the first separator into components of high order and low order, a third separator for separating the component of low order into plural elements of low order by inverse frequency multiplexing, a fourth separator for separating the high order components into plural elements of high order by inverse time-division multiplexing, an orthogonal transformer for orthogonal transforming the plural elements of low order and high order with a characteristic which is the inverse of the transmitter side's orthogonal transformation characteristic, and a combiner for combining, the signals resulting from the orthogonal transformation with the first television signal.

A more complete appreciation of the present invention and many of its attendant advantages will be readily obtained by reference to the following detailed description considered in connection with the accompanying drawings, in which:

Figure 1 is a block diagram of a multiplex transmitter according to the present invention.

Figure 2 illustrates a wide aspect television picture including its center and side portions.

Figure 3 is a block diagram of the signal processing circuitry shown in Figure 1.

Figures 4A-F illustrates the operation of the multiplex transmitter shown in Figure 1.

Figure 5 illustrates the vertical over scanning portion of a television receiver.

Figure 6 is a block diagram of a multiplex receiver according to the present invention.

Figure 7 is a block diagram of signal processing circuitry shown in Figure 6.

Figure 8 provides other examples of the multiplex transmitter and receiver configurations.

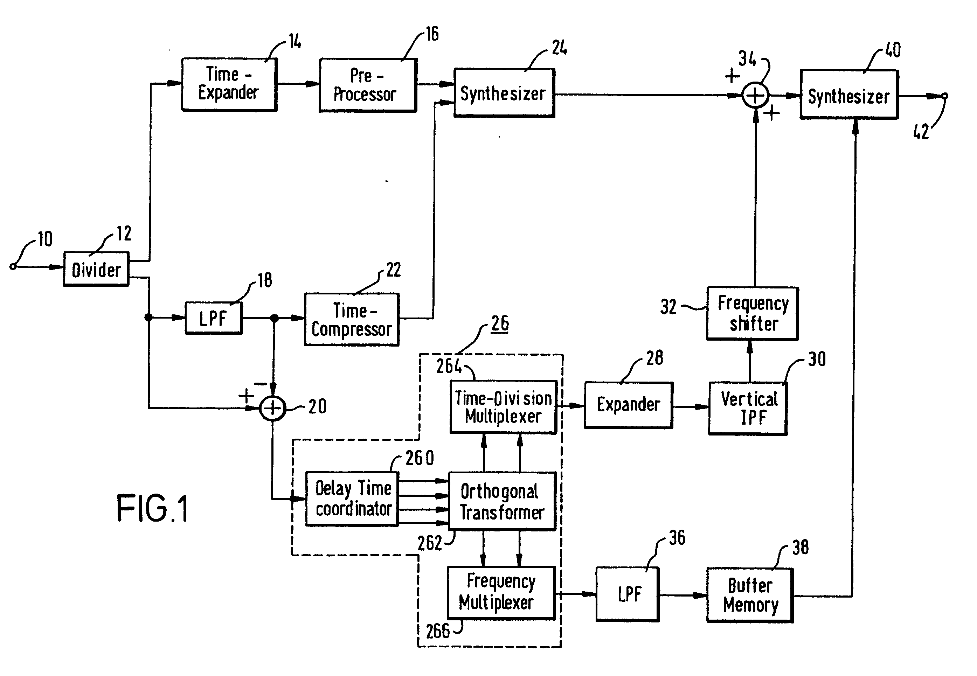

The preferred embodiment of the present invention will now be described in detail with reference to the accompanying drawings. Figure 1 is a block diagram of a multiplex transmitter for an additional signal according to one embodiment of the invention.

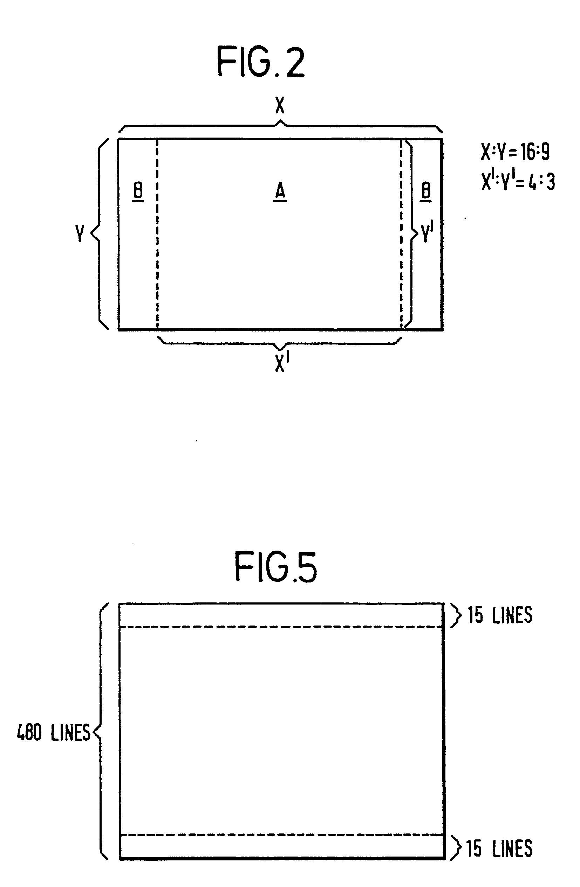

An input terminal 10 receives a wide picture signal (whose aspect ratio is, for example, 16:9). A divider 12 divides the signal from the input terminal 10 into signals representing the center portion A and the side portion B of the picture. (See Figure 2). In this embodiment, the center portion of the picture has an aspect ratio 4:3.

The signal representing the center portion (hereinafter referred to as the center portion signal) is time expanded to four thirds of its original duration by time expander 14. Then, the high frequency band component in the skew direction is deleted from the signal by pre-processor 16.

The signal representing the side portion of the picture (hereinafter referred to as the side portion signal) is input to a low-pass filter (LPF) 18 and subtracter 20. The low pass filter 18 outputs a low frequency signal. The subtracter 20 subtracts the output of the low pass filter 18 from the output of the divider 12. Thus, subtracter 20 outputs a high frequency signal.

The low frequency signal from the low pass filter 18 is input to a time-compressor 22 The time-compressor 22 compresses the input signal to one quarter of its original duration. The compressed signal from the times-compressor 22 is synthesized with the output from the pre-processor 16 in a synthesizer 24. The compressed signal is superimposed onto the center portion signal in the vertical over-scanning part of the center portion signal.

The output of the subtracter 20, which is the high frequency component of the side portion signal is input to a delay time coordinator 260 of a signal processor 26 which is described in more detail later. The delayed signal from the delay time coordinator 260 is orthogonal-transformed in a transformer 262. The high order and low order components of the output from the transformer 262 are input to a time-division multiplexer 264 and a frequency multiplexer 266, respectively.

The output from the time-division multiplexer 264 is input to an expander 28 and expanded by two times. The expander 28 expands the input signal by two times; however, the vertical band of the output from the expander 28 is limited by a vertical interpolation filter (vertical IPF) 30. The output of the vertical IPF 30 is frequency-shifted by frequency shifter 32 and input to adder 34. The adder 34 adds outputs from the synthesizer 24 and the frequency shifter 32. Therefore, the output from the frequency shifter 32 is superimposed as a high frequency signal in the skew direction of the center portion of the picture.

The output from the frequency multiplexer 266 is input to low pass filter (LPF) 36 and its band is limited by low pass filter 36 such that the number of the scanning lines of the output from the multiplexer 266 is one- half of the input thereof. The output signal from low pass filter 36 is input to buffer memory 38 and the position of the signal is changed such that it corresponds to the vertical over-scanning area.

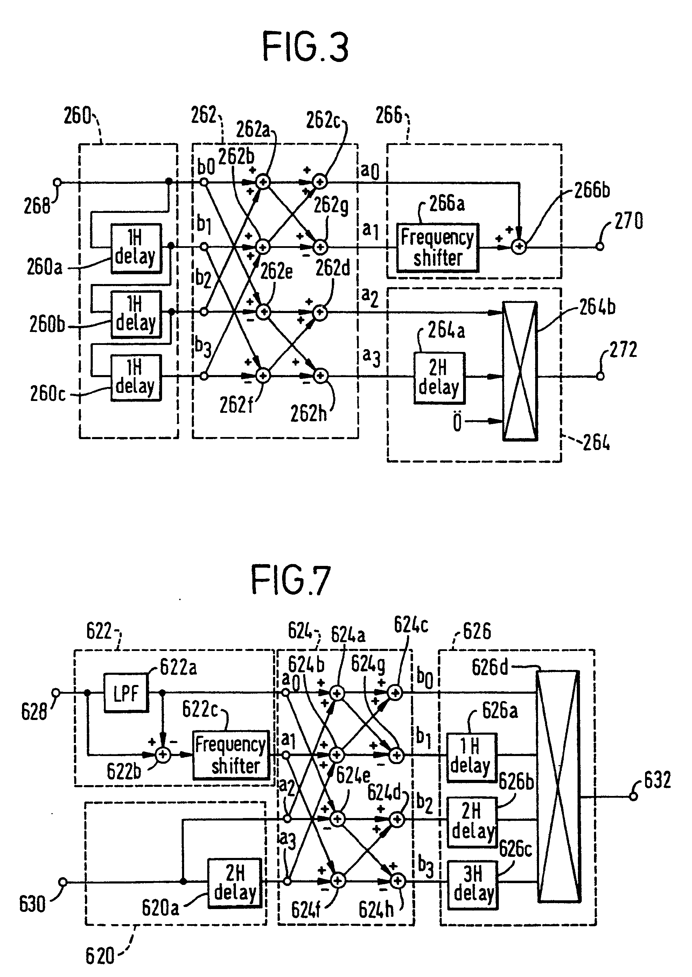

The outputs from the adder 34 and the memory 38 are synthesized by a synthesizer 40. The output from the synthesizer 40 is obtained from an output terminal 42. The signal processor 26 will now be described in detail below; Figure 3 is a block diagram of the signal processor 26 shown in Figure 1.

An input terminal 268 receives the output signal from the subtracter 20. The delay time coordinator 260 has a series circuit of delay circuits 260a, 260b, and 260c. The delay circuit 260a is connected to the input terminal 268. The delay circuits 260a, 260b, 260c each delay the input signal thereof for 1H (H represents one horizontal scanning period).

The orthogonal transformer 262 has adders 262a through 262d and subtracters 262e through 262h. The adder 262a adds the outputs from input terminal 268 and delay circuit 260b. The adder 262b adds the outputs from delay circuits 260a and 260c. The subtracter 262e subtracts the outputs of input terminal 268 from delay circuit 260b. The subtracter 262f subtracts the outputs of delay circuits 260a from 260c. The adder 262c adds the output from adders 262a and 262b. The subtracter 262g subtracts the output of adder 262b from adder 262a. The adder 262d adds the outputs from subtracter 262e and 262f. The subtracter 262h subtracts the output of subtracter 262f from subtracter 262e.

The frequency multiplex circuit 266 has a frequency shifter 266a and adder 266b. The frequency shifter

4

266a shifts the frequency of the output from the subtracter 262g to a different frequency than that of the output of adder 262c. The adder 266b adds the output from the frequency shifter 266a and adder 262c. The output from the adder 266b is output to a terminal 270 which is connected to the low pass filter (LPF) 36.

The time-division multiplexer 264 has a delay circuit 264a and a selector 264b. The delay circuit 264a delays the output of the subtracter 262h by period of 2H (H represents one horizontal scanning period). The selector 264b selects the output of the adder 262d, "O", or the delay circuit 264a. The selector 264b selects the inputs in sequence, one every period of 1H. The output from the selector 264b is output to an terminal 272 which is connected to the expander 28.

The operation of the transmitter will now be described below. Attention is again directed to Figure 1.

The wide aspect picture signal input from the terminal 10 is divided into a center portion and side portion of the picture in divider 12. The center portion of the picture is time-expanded by fourthirds in the time-expander 14 and the high frequency component in the skew direction of the center portion of the picture is deleted by pre-processor 16.

The side portion of the picture output from the divider 12 is divided into a low frequency component and a high frequency component by the low pass filter (LPF) 18 and subtracter 20. The low frequency component from the low pass filter is time-compressed to a quarter of its original duration by the compressor 22. This time-compressed signal is synthesized with the center portion of the picture, wherein the time-compressed signal is superimposed to vertical over-scanning portion of the center portion signal.

The high frequency component signal from the subtracter 20 is delayed to get the signals with 1H, 2H, and 3H by the delay time coordinator 260 in the signal processor 26 (hereinafter, see Figure 3, also). The signals b0, b1, b2, and b3, with no delay, 1H delay, 2H delay and 3 H delay, respectively, from the circuit 260 are Hadamard transformed by diagonal transformer 262.

There are many diagonal transformations such as discrete Fourier transformations (DFT) and discrete cosine transformations (DCT). In this embodiment, the Hadamard transformation is used because the hardware size is small. However, other diagonal transformations may be used easily and fall within the scope of this invention.

By use of the adders 262a through 262d and the subtracters 262e through 262h of the transformer 262, biquadratic Hadamard transformation is performed as described below:

$$
\begin{vmatrix} a0 \\ a1 \\ a2 \\ a3 \end{vmatrix} = \frac{1}{4} \begin{vmatrix} 1 & 1 & 1 & 1 \\ 1 & -1 & 1 & -1 \\ 1 & 1 & -1 & -1 \\ 1 & -1 & -1 & 1 \end{vmatrix} \begin{vmatrix} b0 \\ b1 \\ b2 \\ b3 \end{vmatrix} \quad (1)
$$

where a0 through a3 are outputs from the transformer 262 and b0 through b3 are outputs of delay time coordinator 260.

The terms a0 and a1, the lower order components of the output signal from the transformer 262, are added by the adder 266b of the frequency multiplex circuit 266 after shifting the frequency of the signal a1 to a different frequency band from that of the signal a0 by the frequency shifter 266a. Meanwhile, the terms a2 and a3, the high order components of the output signal from the transformer 262, are time-division multiplexed by the time-division multiplexer 264. That is, the selector 264b selects and outputs the signals a2, "O", and delayed a3 in the above order, every period of 1H.

The output through the output terminal 272 from the multiplexer 264 is time-expanded by two times by the expander 28. However, the vertical band of output from the expander 28 is limited by the vertical IPF 30. The output from the vertical IPF 30 is frequency-shifted by the frequency shifter 32 and superimposed on the high frequency band in the skew direction of the center portion signal of the picture by the adder 34.

The output through the output terminal 270 from the frequency multiplexer circuit 266 is input to the horizontal LPF 36 and the position of the signal is changed to the vertical over-scanning portion by the buffer memory 38. The output from frequency shifter 32 is synthesized with the output from the adder 34 by the synthesizer 40.

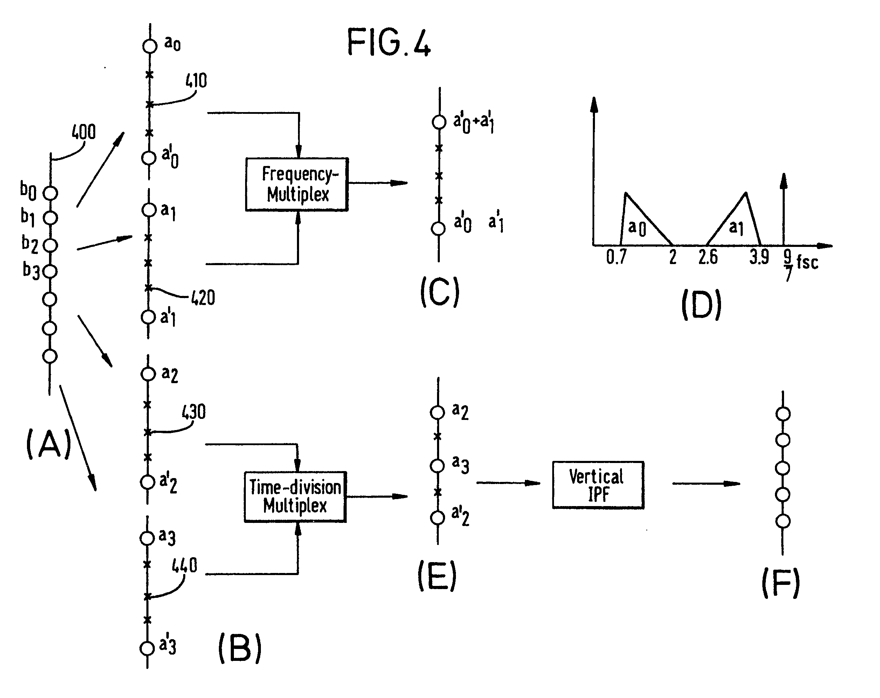

Figure 4(A) shows the output from the adder 20 (see Figure 1). The solid line 400 shows a field and small circles show the horizontal scanning lines. The four lines are each orthogonally transformed as a pair. The lines b0, b1, b2 and b3 are transformed by equation (1), and thereby four signals 410, 420, 430, 440 as shown in Figure 4(B) are obtained. An output signal (a0 + a1) is obtained by the frequency multiplexing the signal a0 and a1 (see Figure 4(c)). Therefore, if the carrier used for the frequency multiplexer is 9/7 fsc (approx. 4.6 MHz) and the low pass filter has a cutoff frequency of 4.6 MHz is used, the frequency band of the signal a1 may be shifted to between 2.6 MHz and 3.9 MHz. This means that the signal a1 may be multiplexed without overlapping with the frequency of the signal a0 (see Figure 4(D)). Meanwhile, the signals a2 and a3 are time-division multiplexed in blocks of two lines (see Figure 4(E)). The signals a2 and a3 are changed to the signal shown in Figure 4(F) by passing through the vertical IPF.

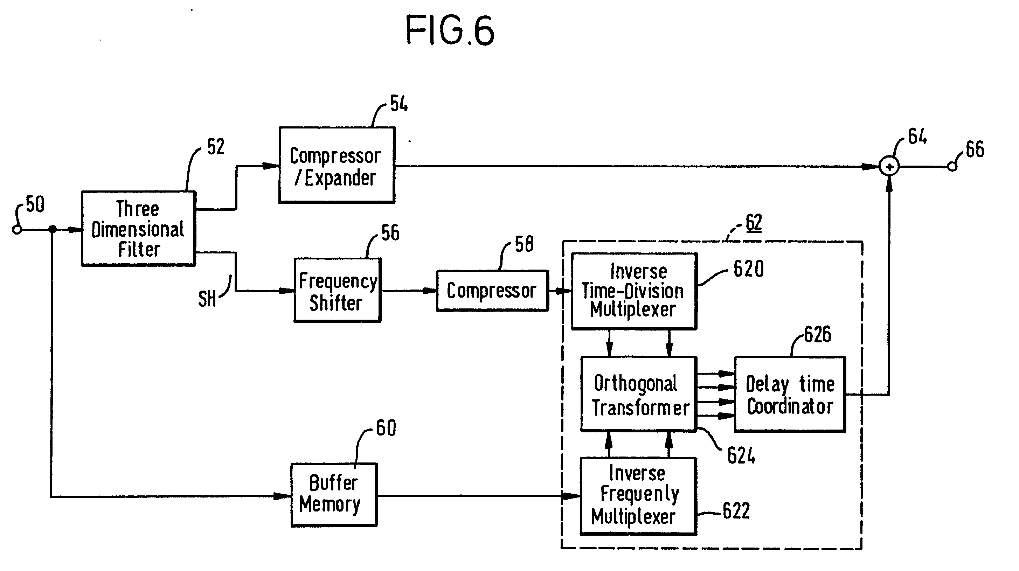

The frequency multiplexed signal (a0 + a1) is synthesized with the vertical over-scanning portion because the signal (a0 + a1) is obtained from two lines by frequency multiplexing. These signals are placed on the upper and lower 15 lines of the 480 lines used for 1 frame of a television signal. The area of the upper and lower 15 lines occupies 6.25% of the area of valid scanning lines (480 lines), and corresponds to the over-scanning area for general television receivers (see Figure 5). Thus, a multiplex signal superimposed in these areas does not interrupt the picture of the TV.

Figure 6 is a block diagram of the multiplex receiver for a television signal with an additional signal superimposed thereon according to a second embodiment of the invention.

An input terminal 50 receives the encoded luminance (Y) signal. A three dimensional filter 52 separates the signal which was superimposed onto the high frequency band in skew direction of the output signal from the input signal at the transmitter and passes it to frequency shifter 56.

A compressor/expander 54 compresses the center portion signal to three quarters of its original duration and expands the portion of the signal that will correspond to the sides of the picture. A frequency shifter 56 shifts the frequency of the output signal from the filter 52. A compressor 58 compresses the output from the frequency shifter 56 by half.

A buffer memory 60 changes the position of the signal superimposed onto the vertical over-scanning portion of the encoded luminance (Y) signal from the input terminal 50.

A signal processor 62, which is detailed later, has an inverse time-division multiplexer 620, an inverse frequency multiplexer 622, an orthogonal transformer 624, and a delay time coordinator 626. The inverse time-division multiplexer 620 separates the signal, which is time-division multiplexed, into the original signals from the transmitting end. The inverse frequency multiplexer 622 separates the signal, which is frequency multiplexed, and shifts the frequency of the signals to their original frequencies. The orthogonal transformer 624 orthogonally transforms the input signal from the circuits 620 and 622 in an inverse relationship with the encoder side. The delay time coordinator 626 changes the input data to serial data to reproduce the signal corresponding to the side portion of the picture.

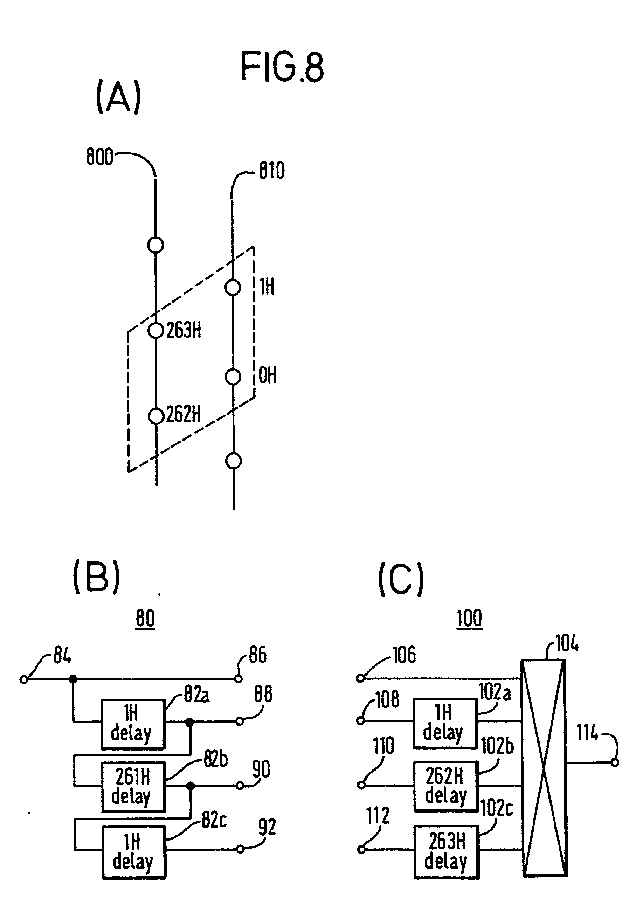

An adder 64 adds the outputs from the compressor/expander 54 and the signal processing circuit 62. Thus, the wide aspect ratio signal is reproduced. The signal processing circuitry 62 is now described below in more detail. Figure 7 is a block diagram of the signal processor 62 shown in Figure 6.

An input terminal 628 receives the output signal from the buffer memory 60. The inverse frequency multiplexer circuit 622 has a low pass filter (LPF) 622a, a subtracter 622b and a frequency shifter 622c. The low pass filter 622a passes the low frequency band of the signal from the input terminal 628. The subtracter 622b subtracts the output of the low pass filter 622a from the input signal at the input terminal 628. The frequency shifter 622c shifts the frequency of the output of the subtracter 622b.

The inverse time-division multiplexer 620 has delay circuit 620a. The circuit 620 outputs signals from the input terminal 630 and with no delay and with a 2H delay by delay circuit 620a.

The orthogonal transformer 624 has adders 624a to 624d and subtracters 624e to 624h. The adder 624a adds the output from low pass filter 622a and input terminal 630. The adder 624b adds the outputs from frequency shifter 622c and delay circuit 620a. The subtracter 624e subtracts the outputs of input terminal 630 from the output of low pass filter 622a. The subtracter 624f subtracts the outputs of delay circuit 620a from frequency shifter 622c. The adder 624c adds the outputs from adders 624a and 624b. The subtracter 624g subtracts the outputs of adder 624b from adder 624a. The adder 624d adds the outputs from adder 624e and subtracter 624f. The subtracter 624h subtracts the outputs of subtracter 624f from the subtracter 624e.

The delay time coordinating circuit 626 had delay circuits 626a, 626b and 626c, and a selector 626d. The delay circuits 626a, 626b and 626c delay the signal with one line, two line and three line periods, respectively. The selector 626d selects the output of adder 624c, delay circuits 626a, 626b, and 626c in order every period of 1H. The output from the selector 626d is output to an output terminal 632 which is connected to the adder 64 (see Figure 6).

The operation of the receiver shown in Figure 6 will now be described in more detail. The input terminal 50 receives the luminance (Y) signal separated from the standard 4.2 MHz encoded signal by the luminance/chrominance (Y/C) separator (not shown). The output from the input terminal 50 is supplied to the three dimensional filter 52 and the buffer memory 60. The three dimensional filter 52 separates the input signal into the signal SH superimposed to the high frequency band in the skew direction and ordinary signal. The signal separated by the three dimensional filter 52 is time-expanded by four times for side portion signal and its time-compressed to three quarters of its original duration for the center portion signal. The signal SH is frequency-shifted by the frequency-shifter 56 and becomes the high frequency component in the first field of original side portion after being compressed by compressor 58.

Meanwhile, buffer memory 60 changes the position of the signal which was superimposed to the vertical over-scanning portion. The output signal from the compressor 58 is separated into the two elements, that is, a2 and a3 signals by the delay circuit 620a which has a delay time of 2H and is located within inverse time-division multiplexer 620.

The output signal from the buffer memory 60 is input to the terminal 628 (Figure 7) of inverse frequency multiplexer circuit 622. In circuit 622, a signal including a0 and the signal superimposed thereon, a1 is separated into its components, a0 and a1. That is, a0 signal is separated from the input signal by the LPF 622a, and signal a1 is obtained from the subtracter 622b.

The output signals a0, a1, a2 and a3 from the inverse time-division multiplexer 620 and the inverse frequency multiplexer 622 are processed by the orthogonal transformer 624. In transformer 624, the operation of an inverse matrix transformation of the matrix in equation (1) is accomplished, and the signals b0, b1, b2 and b3 are reproduced and are the same as those variables on the transmitter side. Specifically, the following equation is solved.

$$
\begin{vmatrix} b0 \\ b1 \\ b2 \\ b3 \end{vmatrix} = \begin{vmatrix} 1 & 1 & 1 & 1 \\ 1 & -1 & 1 & -1 \\ 1 & 1 & -1 & -1 \\ 1 & -1 & -1 & 1 \end{vmatrix} \begin{vmatrix} a0 \\ a1 \\ a2 \\ a3 \end{vmatrix} \quad (2)
$$

In this embodiment, an inverse Hadamard Transformation is performed. Of course, if another type of transformation is performed at the transmitter side, the transformation performed on the receiver side must be an inverse transformation of the chosen type.

The output signals b0, b1, b2, and b3 are input to the delay time coordinating circuit 626. These signals are transformed to serial data in circuit 626. In this manner, the side portions of the signal are reproduced. Finally, the output signals of the compressor/expander 54 and the signal processing circuit 62 are added by the adder 64 and supplied to the output terminal 66.

In the embodiment, the output of the buffer memory 60 is not expanded. This is different from the prior art. In the prior art, a high frequency transmittance noise is transformed to low frequency by expanding. This results in reduction of the visual S/N ratio.

In the above case, the orthogonal transformation is accomplished by the operations between lines. However, the above transformation may also be accomplished by operation between fields. The orthogonal transformation may be accomplished by using the 0H line and the 1H line in an even field (see Figure 8(A)). In Figure 8(A), lines 800, 810 are fields, and circles are horizontal lines.

To carry out the above orthogonal transformation, the delay time coordinators 260 and 626 of the transmitting and receiving sides should be changed to that one shown in Figures 8(B) and 8(C), respectively.

A delay time coordinator 80 includes delay circuits 82a, 82b and 82c in the transmitting side. The delay circuits 82a, 82b and 82c have delay times of 1H, 261H, 1H, respectively. The input signal to an input terminal 84 is output from output terminals 86, 88, 90 and 92 with no delay, 1H delay, 262H delay and 263H delay, respectively.

A delay time coordinator 100 includes delay circuits 102a, 102b, 102c and a selector 104 in the receiving side. The delay circuits 102a, 102b and 102c have delay times of 1H, 262H and 263H, respectively. The input signals to input terminals 106, 108, 110 and 112 are output with no delay, 1H delay, 262H delay and 263H delay.

The selector 104 selects these input signals, in order, to change these signals to serial data. The output signal from the selector 104 is supplied to output terminal 114.

Adopting the multiplex technique according to this invention with transmitting a signal representing the side portion of a wide aspect picture by the method of the Figure 1 reduces the interruption to the pictures of the standard television receiver. This is because the high order components having small amplitude are frequency-multiplexed and the low order components having large amplitude are time-division multiplexed to the vertical over-scanning part of the standard signal.

Note that in a picture having large vertical correlation, such as a picture having vertical lines, the high order components of the orthogonal transformation of the vertical lines equal zero. Thus, the components frequency-multiplexed on the standard picture signal are very much reduced. Thus, there is almost no interruption in the picture of the present television receiver. Note also that pictures having large horizontal correlation such as pictures having horizontal lines may be multiplexed to the horizontal over-scanning part. Thus, the invention is useful in variety of environments.

Additionally, level differences between the scanning lines do not occur even if there are differences between the transmission characteristics between the channels. This is because the orthogonal transformation in the vertical direction is performed, and the output of the transformation is divided into components of high order and low order, and these components are transmitted by separate channels.

In the preferred embodiment, the order of the orthogonal transformation is biquadratic. However, the invention may also use higher order or lower order systems Orthogonal transformations other than the Hadamard Transformation may also be used in the invention.

In the preferred embodiment, the transmission of additional information for widening the aspect of the picture is described. However, the invention may be used to transmit additional information for improving the definition of the picture.

Modifications and variations of the present invention are possible in light of the above teachings. It is, therefore to be understood that, within the scope of the appended claims, the present invention can be practiced in a manner other than as specifically described herein.

## Claims

1. A transmitter for combining a first television signal with a second television signal, said television signals each representing a picture having elements disposed in both the vertical and the horizontal directions, characterised in that the transmitter comprises orthogonal transformation means (262) for orthogonally transforming said second television signal and generating an orthogonally transformed signal including high and low order components, frequency multiplexer means (266) for frequency multiplexing said low order components of said orthogonally transformed signal and generating a frequency multiplexed signal, time-division multiplexer means (264) for time-division multiplexing said high order components of said orthogonally transformed signal and generating a time-division multiplexed signal, synthesizer means (40) for synthesizing said frequency multiplexed signal with the vertical over-scanning part of said first television signal, and superimposition means (34) for superimposing said time-division multiplexed signal on said first television signal.

2. A transmitter according to claim 1 wherein said first and second television signals together represent a composite television picture, the first television signal representing the center portion of said picture, and the second signal representing the side portions of said picture.

3. A transmitter according to claim 2 wherein said composite picture has an aspect ratio of greater than 4:3.

4. A transmitter according to claim 1 wherein the orthogonal transformation means (262) performs a Hadamard transformation.

5. A transmitter according to claim 1 wherein said frequency multiplexer (266) comprises a frequency shifter (266a) and an adder (266b).

6. A transmitter according to claim 1 where said time-division multiplexer (264) comprises a delay circuit (264a) and a selector (264b).

7. A receiver for separating a first television signal from a second television signal, said second television signal having been superimposed on said first television signal and for forming a composite television signal therefrom, comprising first separator means (52,60) for separating said first and second television signals, second separator means (52,60) for separating said second television signal into components of high order and low order, and process circuit means for forming a composite television signal from the outputs of said first and second separator means (52,60), characterised in that said process circuit means comprises third separator means (622) for separating said low order components into plural elements of low order by inverse frequency multiplexing, fourth separator means (620) for separating the high order components into plural elements of high order by inverse time-division multiplexing, orthogonal transformation means (624) for orthogonally transforming the plural elements of low and high order to form an orthogonally transformed signal, and combination means (64) for combining said orthogonally transformed signal and said first television signal into a composite signal.

8. A receiver according to claim 7 wherein said first television signal is a signal representing the center portion of a high aspect picture and the second television signal is a signal representing the side portions of a high aspect picture.

9. A receiver according to claim 8 wherein the high aspect picture is of wider aspect ratio than 4:3.

10. A receiver according to claim 7 wherein the orthogonal transformation performed by the orthogonal transformation means (624) is an inverse Hadamard transformation.

11. A receiver according to claim 7 wherein the third separator means (622) comprises a low-pass filter (622a), a subtracter (622b) subtracting the output of the low-pass filter (622a) from the input signal to the third separator means (622), and frequency shifter means (622c) for shifting the frequency of the output of the subtracter (622b).

12. A receiver according to claim 7 wherein said fourth separator (620) means comprises a delay circuit (620a).

13. A method of combining a first television signal with a second television signal, said television signals each representing a picture having elements disposed in both the vertical and horizontal directions comprising:
    orthogonally transforming said second television signal and generating an orthogonally transformed signal including high and low order components;
    frequency multiplexing said low order components of said orthogonally transformed signal and generating a frequency multiplexed signal;
    time-division multiplexing said high order components of said orthogonally transformed signal and generating a time-division multiplexed signal;
    synthesising said frequency multiplexed signal with the vertical over-scanning part of said first television signal; and
    superimposing said time-division multiplexed signal on said first television signal.

14. The method of claim 13 wherein the first television signal represents the center portion of a high aspect ratio television picture and the second television signal represents the side portions of a high aspect ratio television picture.

15. The method of 14 wherein said picture is of wider aspect ratio than 4:3.

16. The method of claim 13 wherein the orthogonal transformation performed in said orthogonal transforming step is a Hadamard transformation.

17. A method of separating a first television signal from a second television signal, said second television signal having been superimposed on said first television signal and for forming a composite television signal therefrom, comprising:
    separating said first and second television signals;
    separating said second television signal into components of high and low order;
    separating said low order components into plural elements of low order by inverse frequency multiplexing;
    separating said high order components in plural elements of high order by inversed time-division multiplexing;
    orthogonally transforming the plural elements of high and low order to form an orthogonally transformed signal;
    combining said orthogonally transformed signal and said first television signal into a composite signal.

18. A method according to claim 17 wherein the step of orthogonally transforming said high and low order elements comprises performing an inverse Hadamard transformation.

FIG.1

EP 0 447 213 A1

# FIG.2

X

$X:Y = 16:9$
$X^I:Y^I = 4:3$

B  A  B

Y

$Y^I$

$X^I$

# FIG.5

15 LINES

480 LINES

15 LINES

# FIG.3

# FIG.7

# FIG.4

(A)

400

$b_0$
$b_1$
$b_2$
$b_3$

$a_0$

410

$a'_0$

$a_1$

420

$a'_1$

$a_2$

430

$a'_2$

$a_3$

440

$a'_3$

(B)

Frequency-Multiplex

$a'_0 + a'_1$

$a'_0$ $a'_1$

(C)

Time-division Multiplex

$a_2$

$a_3$

$a'_2$

(E)

Vertical IPF

(F)

$a_0$ $a_1$

0.7 2 2.6 3.9 $\frac{9}{7}$ fsc

(D)

EP 0 447 213 A1

# FIG.6

EP 0 447 213 A1

# FIG.8

## (A)

800

810

263H

262H

1H

0H

## (B)

### 80

84

86

82a

88

1H
delay

82b

90

261H
delay

82c

92

1H
delay

## (C)

### 100

106

104

108

102a

1H
delay

114

110

102b

262H
delay

112

102c

263H
delay

European Patent Office

**EUROPEAN SEARCH REPORT**

| | DOCUMENTS CONSIDERED TO BE RELEVANT | | EP 91302122.6 |
|---|---|---|---|
| **Category** | **Citation of document with indication, where appropriate, of relevant passages** | **Relevant to claim** | **CLASSIFICATION OF THE APPLICATION (Int. Cl.5)** |
| A | IEEE TRANSACTIONS ON CONSUMER ELECTRONICS, vol. 35, No. 3, August 1989, New York<br>K. KAWAI et al.<br>"A Wide Screen EDTV"<br>pages 133-141<br>   * Pages 134,135; fig. 1;<br>     section 2.1 *<br>   * Pages 139,140; fig. 11;<br>     section 4.2 *<br>     -- | 1-3,5<br><br><br><br><br><br><br>7-9,17 | H 04 N 7/08 |
| A | NACHRICHTENTECHNISCHE ZEIT-SCHRIFT NTZ, vol. 21, No. 11, November 1968, Berlin<br>HANS DIETER LÜKE<br>"Multiplexsysteme mit ortho-gonalen Trägerfunktionen"<br>pages 672-680<br>   * Page 672; fig. 1; pages 674<br>     -676, section 2.1.2 *<br>     -- | 1,4,7,<br>10,13 | |
| A | US - A - 4 704 629<br>(UREESWIJK)<br>   * Abstract; fig. 2,3 *<br>     -- | 1,7 | **TECHNICAL FIELDS SEARCHED (Int. Cl.5)** |
| A | US - A - 4 078 245<br>(JOHNSON)<br>   * Abstract; fig. 2,3 *<br>     ---- | 1,7 | H 04 N 7/00<br>H 04 N 11/00<br>H 04 J 4/00<br>H 04 J 11/00 |

The present search report has been drawn up for all claims

| Place of search | Date of completion of the search | Examiner |
|---|---|---|
| VIENNA | 12-06-1991 | BENISCHKA |